# EUROPÄISCHE PATENTSCHRIFT

(11) **EP 2 052 013 B1**
(45) Veröffentlichungstag und Bekanntmachung des Hinweises auf die Patenterteilung: **25.04.2018**
(21) Anmeldenummer: 07801659.9
(22) Anmeldetag: 15.08.2007
(51) Int. Cl.: C08J 5/12, C09J 5/06

(54) **VERFAHREN ZUM VERBINDEN VON KUNSTSTOFFTEILEN ELEKTRISCHER ODER ELEKTRONISCHER BAUTEILE**
METHOD FOR JOINING PLASTIC PARTS OF ELECTRIC OR ELECTRONIC COMPONENTS
PROCÉDÉ POUR RELIER DES PIÈCES EN PLASTIQUE DE COMPOSANTS ÉLECTRIQUES OU ÉLECTRONIQUES

(30) Priorität: 15.08.2006 DE 102006038330
(43) Veröffentlichungstag der Anmeldung: 29.04.2009
(73) Patentinhaber: Phoenix Contact GmbH & Co. KG, 32825 Blomberg (DE)
(72) Erfinder: SICK, Stefan, 76534 Baden-Baden (DE); KOCHJOHANN, Tobias, 33175 Bad Lippspringe (DE); HELMIG, Christian, 32760 Detmold (DE)
(74) Vertreter: Gesthuysen, Michael
(86) Internationale Anmeldenummer: PCT/EP2007/007195
(87) Internationale Veröffentlichungsnummer: WO 2008/019833

(56) Entgegenhaltungen:
- EP-A- 0 287 271
- DE-A1- 1 594 117
- GB-A- 748 607
- GB-A- 849 451
- Walter Caseri ET AL: "Polyamide - Dokumentkennung RD-16-03046" In: "Römpp Online, Version 3.28", 1 August 2008 (2008-08-01), Georg Thieme Verlag, XP55040674, pages 1-6,

## Beschreibung

Die Erfindung betrifft ein Verfahren zum Zusammenbau elektronischer und elektrischer Bauteile, insbesondere von mehrpoligen Steckverbindungen, welche sich in Farbe, Form und Funktion unterscheiden können. Von der vorliegenden Erfindung umfaßt sind auch die Bauteile, welche mit Hilfe dieses Verfahrens hergestellt werden. Mit dem erfindungsgemäßen Verfahren können modulare Bauteile mit Polymergehäusen mittels eines neuen Klebe- bzw. Polymerschweißverfahrens verbunden werden, welches insbesondere eine dauerhafte sowie hitze-, kälte- und feuchtigkeitsbeständige Verbindung bzw. Adhäsion der Bauteile zur Folge hat. Insbesondere betrifft die Erfindung ein Verfahren zum Verbinden von zwei oder mehreren Kunststoffteilen von elektrischen oder elektronischen Bauteilen, vorzugsweise von mehrpoligen Steckverbindern, sowie die auf diese Weise verbundenen bzw. zusammengefügten Bauteile.

Kunststoff- bzw. Polymergehäuse von derzeit verfügbaren elektrischen Geräten und Komponenten bestehen aus Polymeren, wie z. B. Polyamiden, wie Polyamid 6 (PA 6) oder Polyamid 6,6 (PA 6,6), oder Polyterephthalaten, wie Polybutadienterephthalat (PBT).

Im allgemeinen werden Gehäuse, speziell Kunststoffgehäuse insbesondere mehrpoliger Steckverbinder, im Spritzgußverfahren hergestellt. Für Sonderanfertigungen und Massenproduktionen von Geräten in einer Vielzahl von Funktions- und Farbvarianten mit identischen Verbindungsstellen werden Module mit unterschiedlichen Farben und Funktionen vorproduziert. Die einzelnen Module werden in Verfahren mit möglichst kurzen Verarbeitungszeiten zusammengefügt.

Die gegenwärtig eingesetzten Rastsysteme zum Verbinden von Kunststoffteilen weisen gewisse Beschränkungen in bezug auf die Festigkeit der Verbindung zwischen den Kunststoffteilen auf. Zum Verbinden der Kunststoffteile geeignete Klebstoffe, wie z. B. Acrylklebstoffe oder Klebstoffe auf der Grundlage von Polyurethanen, weisen zwar in vielen Fällen ausreichende Adhäsionseigenschaften auf, härten jedoch im Hinblick auf die Produktionsgeschwindigkeit und den Produktionsdurchsatz zu langsam aus; da die Klebstoffe und das Polymermaterial der Gehäuse ein unterschiedliches Wärmeausdehnungsverhalten zeigen, kann es zudem zur Ablösung des Klebstoffs kommen, wenn die Geräte klimatischen Veränderungen ausgesetzt werden.

Auch andere Verfahren zum Verbinden von Kunststoffteilen sind dem Fachmann bekannt: So sind dem Fachmann beispielsweise Verfahren wie das Kaltschweißen mit Lösemitteln oder das Spritzschweißen mit geschmolzenen Polymeren bekannt. Analysen von unter Belastung aufgetretenen Bruchstellen zeigen jedoch häufig Risse in der klebenden Schicht, welche zum Versagen der Verbindung zwischen den zusammengefügten Kunststoffteilen führen.

Ein weiteres Problem beim Zusammensetzen vorproduzierter Kunststoffteile ist die Einhaltung der Anforderungen an die Abmessungen von Endprodukten gemäß unterschiedlicher Normen und Standards.

Um die Variabilität von Bauteilen auf Funktionen und Farben beschränken zu können, wäre es daher wünschenswert, erforderliche Unterschiede in den Abmessungen durch Variieren der Stärke der klebenden Schicht zwischen den Kunststoffteilen zu erzielen. Kaltschweißverfahren mit Lösemitteln führen jedoch lediglich zum Aufquellen der Kontaktflächen der einzelnen Kunststoffteile, es können aber keine definierten Zwischenräume gefüllt werden. Herkömmliche Klebeverfahren weisen dagegen Kohäsionsprobleme bei dicken Klebstoffschichten auf: Gegenwärtig eingesetzte Klebstoffe zeichnen sich durch große Adhäsionskräfte aus und werden mit dem Ziel eingesetzt, als dünne Schicht zwischen zwei Oberflächen eine starke Haftung herzustellen; bei dickeren Klebstoffschichten kann es aufgrund der geringen Kohäsionskräfte innerhalb des Klebstoffmaterials, insbesondere im Fall von klimatischen und/oder mechanischen Belastungen, zu Rissen in der Klebstoffschicht kommen.

Neben den zuvor beschriebenen Verfahren sind im Stand der Technik auch verschiedene thermoplastische Schweißverfahren entwickelt worden, so z. B. das Hochfrequenzschweißen, das Vibrationsschweißen, das Laserdurchstrahlschweißen und das Rotationsschweißen. Diese Verfahren sind zwar für einen großen Bereich von Schweißbedingungen und Verarbeitungsparametern geeignet; bei allen Verfahren jedoch kommt es zu einer Energiefreisetzung im Bereich der Kontaktflächen. Das Schmelzen des jeweiligen Kunststoffmaterials kann zwar prinzipiell gesteuert werden, dennoch gibt es zwei entscheidende Nachteile: Zum einen kann die Energiefreisetzung das Verhältnis zwischen kristallinem und amorphem thermoplastischem Material beeinflussen, wodurch es beim Einsatz des betroffenen Produkts im Fall von thermischen und/oder mechanischen Belastungen zu inneren Spannungen im Material kommen kann. Zum anderen werden unter Umständen Zusätze benötigt, um das Fließen des geschmolzenen Materials an den Kontaktflächen zu fördern, woraus sich jedoch unerwünschte Sekundäreffekte, wie z. B. eine Änderung der Gleitfähigkeit oder der Isoliereigenschaften des Materials, ergeben können.

Die WO 95/26868 A1 beschreibt die Verwendung einer definierten Mischung von hochkristallinem Polyamid und halbaromatischem amorphem Polyamid, um die Ergebnisse beim Vibrations-, Ultraschall-, Infrarot- und Heizelementschweißen zu verbessern. Die US 2002/143117 A1 beschreibt ein optimales Verhältnis zwischen aromatischen und aliphatischen Polyamiden, um beste Ergebnisse beim Schweißen zu erzielen. Die EP 0 070 001 A1 beschreibt die Verwendung ausgewählter thermoplastischer Polyamidcopolymere zusammen mit halbkristallinen Polyamiden zur Herstellung von Gießharzen. Die vorgenannten Druckschriften nutzen die Vorteile von Mischungen aus amorphen und kristallinen thermoplastischen Kunststoffen, wobei die jeweiligen Materialien jedoch aus mindestens zwei unterschiedlichen Polymeren bestehen, so daß sich ein erhöhter Aufwand bei der Rückgewinnung ergibt.

Die EP 1 254 919 A1 beschreibt die Vorteile der Verwendung von Polyamiden mit unterschiedlichen Erweichungstemperaturen und die gemeinsame Verwendung von Additiven, welche die Scherviskosität der Schmelze während des Schweißens vergrößert. Die US 4 919 987 A beschreibt eine optimale Oberflächenform für das Vibrationsschweißen und optimale Oberflächenstrukturen von Kontaktflächen.

Alle vorgenannten Druckschriften erfordern jedoch eine Energiefreisetzung, welche negativen Einfluß in bezug auf die thermische Vergangenheit der Endprodukte und das Verhältnis von amorphem zu kristallinem Material hat.

Die DE 1 594 117 A1 offenbart ein Klebemittel für Polyamide, bestehend aus einer Lösung von Polyamiden in konzentrierter Ameisensäure, wobei dieser Lösung eine Mischung aus niederen Alkoholen und/oder Ketonen sowie leicht flüchtigen Chlorkohlenwasserstoffen zugesetzt ist. Der Gewichtsanteil des Polyamids im Klebemittel soll dabei zwischen 1 % und 15 % liegen. Um die Stabilität des Klebemittels zu verbessern, wird vorgeschlagen, den Anteil an Chlorkohlenwasserstoff zu erhöhen, was zu einer Verringerung der Anteile der übrigen Bestandteile und damit auch des Anteils des Polyamids führt. Als Beispiel für das zu verklebende Polyamid werden dünne, ebene Platten der Abmessungen 100 x 50 x 2 mm genannt. Auf diese Platten werden Klebemittel mit einem Gewichtsanteil von 5 % (Beispiel 1) oder 10 % (Beispiele 2 und 3) Polyamid aufgepinselt und unter Druck zum Abbinden fixiert.

Die EP 0 287 271 A2 offenbart eine Mischung aus Benzylalkohol, Phenol und 5 bis 30 Gew.-% Polyamid zum Heißverkleben von Polyamiden. Zur Herstellung der Mischung wird diese zunächst erwärmt, vorzugsweise auf eine Temperatur von 40 bis 100°C, bevor man die Mischung unter weiterem Rühren abkühlen lässt. Anschließend wird die Mischung auf einen in Form eines Filmes oder einer Bahn vorliegenden Polyamidgegenstand aufgetragen und dann der beschichtete Polyamidgegenstand mit dem zweiten Polyamidgegenstand in Berührung gebracht, wobei die Polyamidgegenstände unter Verwendung eines Heißsieglers erwärmt werden. Um das Polyamid im Phenol zu lösen, ist eine Erwärmung der Mischung aus Phenol und Benzylalkohol erforderlich, was die Herstellung des Klebers aufwendiger macht.

Die GB 748,607 A offenbart einen Klebstoff zum Verkleben von Polyamidoberflächen bestehend aus Polyamid gelöst in Resorcin und Alkohol. Bei dem in dieser Druckschrift offenbarten Verfahren ist eine Erwärmung der Polyamidoberflächen auf 120 - 200°C erforderlich. Der Klebstoff wird dann als dünne Lösung auf die Polyamidoberfläche gesprüht.

Auch die GB 849,451 A offenbart ein Verfahren zum Verkleben von Polyamiden, wobei die zu verklebenden Gegenstände mit einer alkoholischen Lösung aus Polyamid und einem Polyisocyanat behandelt werden. Bei dem in dieser Druckschrift beschriebenen Verfahren handelt es sich um ein mehrstufiges und damit zeitaufwendiges Verfahren, das aus diesem Grund für die industrielle Anwendung beim Verbinden von Gehäuseteilen eine elektrischen Geräts, insbesondere eines Steckverbinders, nicht geeignet ist.

Zwar werden in der plastikverarbeitenden Industrie, z. B. beim Zusammenfügen von Schlauchmaterialien aus PVC oder zum Herstellen von Nähten zwischen PVC-Fußbodenfliesen auch Kaltschweißverfahren angewandt. Jedoch sind derartige Verfahren nicht für Kunststoffmaterialien geeignet, wie sie im Bereich von elektrischen und elektronischen Bauteilen zum Einsatz kommen. Insbesondere sind diese Verfahren in bezug auf thermoplastische Kunststoffmaterialien, wie Polyamide oder Polyterephthalate, oder in bezug auf die Zusammensetzung gegossener Kunststoffteile, insbesondere im Spritzguß hergestellter Kunststoffteile, ungeeignet. Insbesondere ist dabei zu beachten, daß Polyamide dafür bekannt sind, daß sie sensibel und kritisch auf die Einwirkungen von Wärme reagieren und die thermische Vergangenheit einen erheblichen Einfluß auf die Materialeigenschaften des Endprodukts haben kann.

Der Erfindung liegt daher die Aufgabe zugrunde, ein effizient arbeitendes Verfahren zum Verbinden von Kunststoffteilen elektrischer oder elektronischer Bauteile, insbesondere von mehrpoligen Steckverbindern, bereitzustellen, welches die zuvor geschilderten Nachteile der Verfahren des Standes der Technik zumindest weitgehend vermeidet oder aber wenigstens abschwächt.

Diese Aufgabe wird durch ein Verfahren mit den Merkmalen des Patentanspruchs 1 gelöst. Die Anmelderin hat nun überraschenderweise herausgefunden, daß sich Kunststoffteile von elektrischen oder elektronischen Bauteilen, insbesondere von mehrpolig ausgebildeten Steckverbindern, dadurch in effizienter Weise miteinander verbinden lassen, dass die zu verbindenden Kunststoffteile mittels eines Klebstoffs in einem Klebeverfahren miteinander verbunden werden, welcher derart ausgewählt wird, daß er in bezug auf den Kunststoff, aus dem die zu verklebenden Kunststoffteile bestehen, kompatibel ausgebildet ist. Weitere, insbesondere vorteilhafte Ausgestaltungen der vorliegenden Erfindung sind Gegenstand der Verfahrensunteransprüche.

Weiterer Gegenstand der Erfindung sind die mit dem erfindungsgemäßen Verfahren erhaltenen Produkte, welche in erfindungsgemäßer Weise verbundene Kunststoffteile, insbesondere modulare Bauteile (z. B. Gehäusteile), aufweisen.

Bei der Erfindung bestehen die zu verklebenden Kunststoffteile selbst (z. B. modulare bzw. kompatible Teile eines Gehäuses) aus zueinander gleichen oder gleichartigen oder zumindest zueinander kompatiblen Polymeren und ist der Klebstoff derart ausgewählt, daß er auf den gleichen oder gleichartigen Polymeren wie die Polymere der zu verklebenden Kunststoffteile basiert.

Das erfindungsgemäße Verfahren führt zu einer Vielzahl von Vorteilen, welche nachfolgend an einigen Beispielen veranschaulicht werden sollen:
Aufgrund der Tatsache, daß der erfindungsgemäß eingesetzte Klebstoff derart ausgewählt wird, daß er in bezug auf den Kunststoff bzw. die Polymere der zu verklebenden Kunststoffteile kompatibel ausgebildet ist, insbesondere auf einem gleichen oder gleichartigen Polymer wie die zu verklebenden Kunststoffteile basiert, wird eine spannungsfreie Verklebung erzeugt, d. h. die innere Spannung zwischen den Kontaktflächen der verklebten Kunststoffteile und der Klebstoffschicht ist auf ein Minimum reduziert bzw. nicht vorhanden.

Aufgrund gleichartiger bzw. gleicher Polymermaterialien für die Ausbildung des Klebstoffs einerseits und die zu verklebenden Kunststoffteile andererseits werden gleichartige Polymerstrukturen erhalten, welche in bezug auf ihre physikochemischen und mechanischen Eigenschaften gleiche bzw. gleichartige Verhaltensweisen aufweisen. Unter klimatischen und/oder mechanischen Belastungen regieren gleiche bzw. gleichartige Polymermaterialien in gleicher Weise, so daß auch unter extremen Bedingungen Spannungen vermieden werden.

Zudem führt der Einsatz gleichartiger Polymermaterialien für den erfindungsgemäß ausgewählten Klebstoff einerseits und die zu verklebenden Kunststoffteile des elektrischen oder elektronischen Bauteils andererseits zu einer deutlichen Vereinfachung und Reduzierung der Materialien, welche für den Bau dieser Bauteile verwendet werden. Damit werden gleichermaßen Demontage und Recycling maßgeblich vereinfacht. Auch wird hierdurch die Dauerhaftigkeit und Beständigkeit der Verklebung, insbesondere auch unter extremen Belastungen (z. B. thermische, klimatische und/oder mechanische Belastung), deutlich verbessert.

Aufgrund gleichartiger Polymermaterialien für den eingesetzten Klebstoff einerseits und die zu verklebenden Kunststoffteile andererseits wird nach dem Verkleben und Aushärten des Klebstoffs ein in sich homogenes, stabiles Gefüge bzw. ein homogener Verbund erhalten. Aufgrund der Stabilität dieses Verbunds ist es gleichermaßen möglich, die Menge bzw. Dicke des Klebstoffauftrags in weiten Bereichen zu variieren, ohne daß hierunter die Qualität der Klebverbindung leidet; auf diese Weise läßt sich die Stärke der klebenden Schicht zwischen den Kontaktflächen der zu verklebenden Kunststoffteile in weiten Bereichen variieren, was dazu genutzt werden kann, die Abmessungen der elektrischen oder elektronischen Bauteile gezielt zu variieren bzw. zu steuern, insbesondere im Hinblick auf die Einhaltung bestimmter Maße, beispielsweise für unterschiedliche Anforderungen, Normen, Standards oder dergleichen.

Das erfindungsgemäße Verfahren ermöglicht das Fügen bzw. Verbinden elektrischer Verbindungsstellen aus Modulen mit Polymergehäusen, welche aus Polyamiden bestehen. Der erfindungsgemäß eingesetzte Klebstoff ist aus dem gleichen Basispolymer wie die zu verklebenden Kunststoffteile ausgewählt, so daß auf diese Weise auch eine einfache Rückgewinnung des Materials möglich ist. Insbesondere ist das eingesetzte Klebstoffmaterial imstande, definierte Zwischenräume zwischen den zu verklebenden Kunststoffteilen auszufüllen, um auch Anforderungen an die Endabmessungen von Produkten zu erfüllen, welche beispielsweise durch Kunden oder regionspezifische Bedingungen (z. B. Normen, Standards etc.) gestellt werden. Infolge der gezielten Auswahl des Klebstoffmaterials ist eine dauerhafte Adhäsion und Kohäsion im Bereich des Klebstoffverbunds gewährleistet.

Die Erfindung wird nachfolgend anhand besonderer Ausführungsformen beschrieben, welche in bezug auf den Anmeldungsgegenstand jedoch keinesfalls beschränkend sind, sondern lediglich zur Illustration des allgemeinen Erfindungsgedanken dienen:
Im Rahmen der Erfindung können beispielsweise Kunststoffgehäuse von Bauteilen für elektronische oder elektrische Geräte, welche z. B. durch Spritzgußverfahren, durch Gießen thermoplastischer Materialien in offene Abdruckformen oder durch ein herkömmliches Verfahren zum Formen von Polymergehäusen hergestellt sind, verklebt werden.

Das Polymermaterial der mehrteilig aufgebauten Kunststoffgehäuse besteht, jeweils aus thermoplastischen Polyamiden wie PA-4 (Polymer auf der Basis von Aminobutansäure), PA-6 (Polymer auf der Basis von ε-Caprolactan), PA-7 (Polymer auf der Basis von Amino-7-heptansäure), PA-8 (Polymer auf der Basis von Capryllactam), PA-9 (Polymer auf der Basis von Amino-9-nonansäure), PA-10 (Polymer auf der Basis von Amino-10-decansäure), PA-11 (Polymer auf der Basis von Amino-11-undecansäure), PA-12 (Polymer auf der Basis von Lauryllactam), PA-4,6 (Polymer auf der Basis von Tetramethylendiamin und Adipinsäure), PA-6,6 (Polymer auf der Basis von Hexamethylendiamin und Adipinsäure), PA-6,9 (Polymer auf der Basis von Hexamethylendiamin und Essigsäure), PA-6,10 (Polymer auf der Basis von Hexamethylendiamin und Sebacinsäure), PA-6,12 (Polymer auf der Basis von Hexamethylendiamin und Dodecansäure) oder aus Copolymeren, wie z. B. PA-6,6/6 (Copolymer auf der Basis von Hexamethylendiamin, Adipinsäure und Sebacinsäure), sowie deren Derivaten.

Gemäß der Erfindung wird der Klebstoff für zu verklebende Polyamidgehäusebestandteile aus einem Polyamid ausgewählt dessen morphologische Eigenschaften den morphologischen Eigenschaften des zu verklebenden Gehäusematerials sehr ähnlich ist. Zur Herstellung des Klebstoffs wird dieses Polymer in Ameisensäure gelöst Die Konzentrationen liegen in diesem Fall im Bereich von 18 bis 35 Massenprozent. Das ausgewählte Lösemittel sollte eine hohe Flüchtigkeit unter Arbeitsbedingungen, insbesondere einen Siedepunkt im Bereich von 0 bis 100 °C, aufweisen.

Bei dem erfindungsgemäßen Klebeverfahrens wird Ameisensäure als polare organische Säure eingesetzt. Die Konzentration des ausgewählten Polyamids kann von 23 bis 30 Masseprozent reichen. Der Klebstoff kann in einem ersten Produktionsschritt hergestellt werden: Verdickungsmittel, wie z. B. Xanthan oder Guarkernmehl, insbesondere in Konzentrationen zwischen 0,01 und 0,2 Massenprozent, können gegebenenfalls erforderlich sein, um die Klebstofflösung über einen längeren Zeitraum zu stabilisieren und das Absetzen von Bestandteilen zu vermeiden. Dem Klebstoff können außerdem Additive, vorzugsweise die gleichen Additive wie dem Material des Polymergehäuses, zugesetzt werden, z. B. Pigmente, Füllstoffe oder Flammschutzmittel. Die Temperatur sollte während des Klebe- bzw. Schweißverfahrens zwischen 15 und 30 °C liegen. Das Ausfüllen eines definierten Zwischenraums zwischen den zu verklebenden Kunststoffteilen kann beispielsweise durch Punktauftrag des Klebstoffs auf die Oberfläche eines der beiden zu verbindenden Teile und nachfolgendes Zusammendrücken der Teile unter geringem Druck, insbesondere im Bereich von 0,1 bis 20 N/m², realisiert werden. Die dynamische Viskosität des Klebstoffs bei 25 °C sollte im Bereich von 500 bis 40.000 mPa·s, vorzugsweise 8.000 bis 25.000 mPa·s, ausgewählt werden.

Bei einer Ausführungsform der Erfindung kann das Polyamid gemahlen, vorzugsweise kaltgemahlen, werden, z. B. bei -196 °C (z. B. in einem mit flüssigem Stickstoff gekühlten Mahlwerk). Die mittlere Partikelgröße des Polyamids kann nach dem Mahlen im Bereich von 0,1 bis 50 µm liegen. Das Polyamidpulver kann nachfolgend in eine Kammer mit einer Patrone aus Glas, PTFE, fluoriertem Olefin oder Keramik gefüllt werden, wobei die Patrone mit einer Mischvorrichtung ausgestattet ist, z. B. mit einem fest installierten Rührer. Eine zweite Kammer wird mit einem Lösemittel befüllt. Zu Beginn des Klebevorgangs werden beide Kammern miteinander verbunden. Über die Mischvorrichtung wird dann der Inhalt der Kammern durchmischt. Der Klebstoff entsteht in diesem Fall in situ, d. h. an Ort und Stelle, so daß keine Stabilisierung erforderlich ist.

Bei einer anderen Ausführungsform wird der vorproduzierte oder in situ hergestellte Klebstoff in den Zwischenraum zwischen den Kontaktflächen der zu verklebenden Kunststoffteile gespritzt.

Bei allen vorbeschriebenen Ausführungsformen kann die Klebstoffschicht im Bereich von 0,0001 bis 5 mm, bevorzugt 0,05 bis 0,3 mm, variieren, bezogen auf die ausgehärtete Kunststoffschicht.

Die Kunststoffteile, welche mit dem erfindungsgemäßen Verfahren hergestellt bzw. zusammengefügt sind, erweisen sich als extrem temperaturbeständig in einem großen Temperaturbereich, z. B. in einem Temperaturbereich von -90 bis 90 °C. Die zusammengefügten Teile behalten ihre Zugspannungs- und Biegefestigkeiten auch nach langen Hitzealterungsperioden bei, z. B. bei 14-tägiger Lagerung bei 80 °C und Simulationen von Klimaänderungen im Bereich von -90 bis 80 °C. Bei Bruchtests unter mechanischer Belastung (200 Newton) wurden bei extremer Belastung lediglich Brüche im Gehäuse des Materials, nicht aber an den Klebeflächen festgestellt.

Bemerkenswerterweise ergeben Messungen der Glasübergangstemperatur mittels dynamischer Differenzkalorimetrie gleiche Ergebnisse für die Kontaktflächen der verklebten Gehäuse und für die Klebstoffschicht. Die jeweiligen DSC-Kurven sind sehr ähnlich, wodurch die Aussage unterstützt wird, daß das Gehäusematerial und der ausgehärtete Klebstoff ähnliche Kristallinitäten aufweisen.

Das erfindungsgemäße Verfahren ermöglicht das effiziente Verbinden von Kunststoffteilen elektrischer oder elektronischer Bauteile mit hohem Produktionsdurchsatz und kurzen Bearbeitungszeiten beim Zusammensetzen elektrischer und elektronischer Bauteile. Daher eignet es sich insbesondere für den industriellen Einsatz.

Um den Effekt der größtmöglichen Haftung der Klebstoffschicht zu gewährleisten, sollten die in den Patentansprüchen spezifizierten Konzentrationen an Klebstoffpolymeren in den eingesetzten Klebstofflösungen oder -dispersionen nicht signifikant unter- bzw. überschritten werden. Bei Unterschreiten der angegebenen Mindestkonzentrationen wird nicht immer eine ausreichende Haftung erreicht. Bei zu geringen Konzentrationen kann es außerdem aufgrund der großen Menge an insbesondere polarem Lösemittel zu einer Transformation kristalliner Phasen in amorphen Einzelpolymerketten kommen, was gleichermaßen unerwünscht ist. Bei Überschreiten der angegebenen Konzentration wird dagegen angenommen, daß es beim Klebe- bzw. Verbindungsvorgang zu einer Reorganisation der fortbestehenden amorphen und kristallinen Phasen in der Lösung in Wechselwirkung mit den amorphen und kristallinen Polymerfasern an den Kontaktflächen des Polymergehäuses kommt.

Das erfindungsgemäße Verfahren eignet sich insbesondere zum Verkleben bzw. Verbinden von modularen Einzelteilen, insbesondere von Einzelteilen von Kunststoffgehäusen von elektrischen oder elektronischen Bauteilen, vorzugsweise von insbesondere mehrpoligen Steckverbindern. Derartiger Steckverbinder sind beispielsweise in den auf die Anmelderin zurückgehenden Druckschriften DE 38 00 846 A1 und DE 10 2004 009 071 A1 beschrieben, deren diesbezüglicher Offenbarungsgehalt hiermit vollumfänglich durch Bezugnahme eingeschlossen ist. Bislang wurden die Einzelmodule bzw. Gehäuseteile derartiger Steckvorrichtungen, insbesondere von Steckerleiste und Gegensteckerleiste, durch rastschlüssige Verbindungssysteme miteinander verbunden. Das erfindungsgemäße Verfahren ermöglicht erstmals eine verläßliche Verbindung dieser Teile mittels eines industriell durchführbaren, insbesondere mit hohem Produktionsdurchsatz und hoher Reproduzierbarkeit durchführbaren Klebeverfahrens. Bei von der Anmelderin durchgeführten Versuchen an erfindungsgemäß verklebten Produkten mit unterschiedlichen Klebstoffschichtdicken und unterschiedlichen Auftragsmethoden fanden sich bei entsprechenden mechanischen Belastungstests selbst nach vorangehender thermischer Belastung der Proben (72stündige Hitzebelastung bei 70 °C) keine Risse, Brüche oder dergleichen an den geklebten Kontaktflächen; Brüche traten allenfalls im Gehäusematerial selbst auf, jedoch nicht an den Klebestellen. Die von der Anmelderin durchgeführten Versuche belegen eindrucksvoll die Leistungsfähigkeit des erfindungsgemäßen Verfahrens.

Weiterer Gegenstand der Erfindung sind die nach dem erfindungsgemäßen Verfahren erhaltenen, d. h. aus verklebten Kunststoffeinzelkomponenten bestehenden elektrischen oder elektronischen Bauteile, vorzugsweise Steckverbinder bzw. deren Module (z. B. Steckerleiste und Gegensteckerleiste).

Insbesondere sind elektrische oder elektronische Bauteile, vorzugsweise in Form mehrpoliger Steckverbinder, Gegenstand der Erfindung, wobei die Bauteile jeweils zwei oder mehrere Kunststoffteile, insbesondere Einzelmodule, wie Gehäuseteile oder dergleichen, aufweisen, welche miteinander verbunden sind, wobei die Kunststoffteile mittels eines Klebstoffs in einem Klebeverfahren mitein-ander verbunden sind, wobei der Klebstoff derart ausgewählt ist, daß er in bezug auf den Kunststoff, aus dem die zu verklebenden Kunststoffteile bestehen, kompatibel ausgebildet ist.

## Patentansprüche

1. Verfahren zum Verbinden von zwei oder mehreren, jeweils aus thermoplastischen Polyamiden bestehenden Kunststoffteilen eines elektrischen oder elektronischen Bauteils, vorzugsweise eines mehrpoligen Steckverbinders,
wobei die zu verbindenden Kunststoffteile mittels eines Klebstoffs in einem Klebverfahren miteinander verbunden werden, wobei zunächst der Klebstoff auf die zu verklebenden Kontaktflächen der Kunststoffteile aufgebracht wird und die Kontaktflächen nachfolgend zusammengepresst werden,
wobei als Klebstoff ein in Bezug auf den Kunststoff, aus dem die zu verklebenden Kunststoffteile bestehen, kompatibel ausgebildeter, physikalisch abbindender Lösungs- oder Dispersionsklebstoff mit einem Polyamid als Klebstoffpolymer mit mengenbezogenen Konzentrationen von 18 bis 35 Masseprozent in dem Löse- oder Dispergiermittel des Klebstoffes eingesetzt wird,
wobei die morphologischen Eigenschaften des Polyamids des Klebstoffs den morphologischen Eigenschaften des Polyamids der zu verbindenden Kunststoffteile ähnlich sind, und
wobei als Löse- oder Dispergiermittel Ameisensäure eingesetzt wird.

2. Verfahren nach Anspruch 1, **dadurch gekennzeichnet, dass** die zu verklebenden Kunststoffteile im Spritzgussverfahren hergestellt sind.

3. Verfahren nach Anspruch 1 oder 2, **dadurch gekennzeichnet, dass** das Löse- oder Dispergiermittel einen Siedepunkt im Bereich von 0 bis 110 °C aufweist.

4. Verfahren nach einem der Ansprüche 1 bis 3, **dadurch gekennzeichnet, dass** der Klebstoff in situ hergestellt wird, durch bedarfsweises Zusammenmischen der Klebstoffkomponenten, nämlich des Klebstoffpolymers einerseits und des Löse- oder Dispergiermittels andererseits, unmittelbar vor dem Klebstoffauftrag.

5. Verfahren nach einem der Ansprüche 1 bis 4, **dadurch gekennzeichnet, dass** dem Klebstoff weitere Inhaltsstoffe zugesetzt werden, nämlich Additive und/oder Hilfsstoffe, ausgewählt aus Füllstoffen, Pigmenten, Flammschutzmitteln, Stabilisatoren, Gleitmitteln, Weichemachern sowie deren Mischungen, wobei die weiteren Inhaltsstoffe des Klebstoffs kompatibel in bezug auf die zu verklebenden Kunststoffteile ausgewählt werden.

6. Verfahren nach einem der Ansprüche 1 bis 5, **dadurch gekennzeichnet, dass** das Verfahren bei Temperaturen, im Bereich von 15 bis 30 °C durchgeführt wird.

7. Verfahren nach einem der Ansprüche 1 bis 6, **dadurch gekennzeichnet, dass** der Klebstoff mittels Punktauftrag, Spritzen, Sprühen, Verdüsen oder Rakeln auf die zu verklebenden Kontaktflächen der Kunststoffteile aufgebracht wird und die Kontaktflächen mit einem Anpreßdruck von 0,1 bis 20 N/cm² zusammengepresst werden.

8. Verfahren nach einem der Ansprüche 1 bis 7, **dadurch gekennzeichnet, dass** der Klebstoff in einer derartigen Menge aufgetragen wird, dass die Dicke der resultierenden Klebstoffschicht 0,05 und 0,3 mm beträgt und/oder dass über die gewählte Dicke der Klebstoffschicht die Abmessung, des verklebten Produkts gesteuert wird.

9. Verfahren nach einem der Ansprüche 1 bis 8, **dadurch gekennzeichnet, dass** die ausgehärtete Klebstoffschicht einerseits und die verklebten Kunststoffteile andererseits gleiche Kristallinitäten und/oder Morphologien und/oder Glasübergangstemperaturen aufweisen.

10. Verfahren nach einem der Ansprüche 1 bis 9, **dadurch gekennzeichnet, dass** die zu verklebenden Kunststoffteile modulare Gehäuseteile eines mehrpoligen Steckverbinders sind.

11. Elektrisches oder elektronisches Bauteil in Form eines mehrpoligen Steckverbinders, wobei das Bauteil zwei oder mehrere jeweils aus Polyamiden bestehende Gehäuseteile aufweist, welche miteinander verbunden sind,
**dadurch gekennzeichnet,**
**dass** die Verbindung der Kunststoffteile durch ein Klebeverfahren nach einem der Ansprüche 1 bis 10 hergestellt ist.

## Claims

1. Process for the bonding of two or more plastics parts respectively consisting of thermoplastic polyamides and belonging to an electrical or electronic component, preferably a multipole plug connector,
where the plastics parts to be bonded are bonded to one another by means of an adhesive in an adhesive-bonding process, where the adhesive is first applied to the contact areas of the plastics parts that are to be adhesive-bonded, and then the contact areas are pressed together,
where the adhesive used comprises a physically setting solution adhesive or physically setting dispersion adhesive respectively formulated to be compatible with the plastic of which the plastics parts to be adhesive-bonded consist, using a polyamide as adhesive polymer at quantitative concentrations of from 18 to 35 percent by mass in the solvent or dispersion medium respectively used from the adhesive,
where the morphological properties of the polyamide of the adhesive are similar to the morphological properties of the polyamide of the plastics parts to be bonded, and
where formic acid is used as solvent or dispersion medium.

2. Process according to Claim 1, **characterized in that** the plastics parts to be adhesive-bonded have been produced by an injection moulding process.

3. Process according to Claim 1 or 2, **characterized in that** the boiling point of the solvent or dispersion medium is in the range of 0 to 110°C.

4. Process according to any of Claims 1 to 3, **characterized in that** the adhesive is produced in situ by, immediately before application of the adhesive, mixing the components of the adhesive together as required, namely the adhesive polymer on the one hand and the solution or dispersion medium on the other hand.

5. Process according to Claims 1 to 4, **characterized in that** further ingredients are added to the adhesive, namely additives and/or auxiliaries, selected from fillers, pigments, flame retardants, stabilizers, lubricants, plasticizers and mixtures of these, where the further ingredients of the adhesive are selected to be compatible with the plastics parts to be adhesive bonded.

6. Process according to any of Claims 1 to 5, **characterized in that** the process is carried out at temperatures in the range from 15 to 30°C.

7. Process according to any of Claims 1 to 6, **characterized in that** the adhesive is applied by means of spot application, spraying, application by spray nozzle, or doctoring, to those contact areas of the plastics parts that are to be adhesive-bonded, and a pressure from 0.1 to 20 N/cm² is applied to press the contact areas together.

8. Process according to any of Claims 1 to 7, **characterized in that** the quantity applied of the adhesive is such that the thickness of the resultant adhesive layer is from 0.05 to 0.3 mm and/or that the dimension of the adhesive-bonded product is controlled by way of the selected thickness of the adhesive layer.

9. Process according to any of Claims 1 to 8, **characterized in that** the hardened adhesive layer on the one hand and the adhesive-bonded plastics parts on the other hand have identical crystallinities and/or morphologies and/or glass transition temperatures.

10. Process according to any of Claims 1 to 9, **characterized in that** the plastics parts to be adhesive-bonded are modular housing parts of a multipole plug connector.

11. Electrical or electronic component in the form of a multipole plug connector, where the component has two or more housing parts respectively consisting of polyamides which have been bonded to one another,
**characterized in that**
the bond between the plastics parts has been produced by an adhesion process according to any of Claims 1 to 10.

## Revendications

1. Procédé de liaison de deux pièces en plastique ou plus, chacune constituées de polyamides thermoplastiques, d'un composant électrique ou électronique, de préférence d'un connecteur multipolaire,
les pièces en plastique à relier étant collées les unes avec les autres au moyen d'un adhésif par un procédé de collage, l'adhésif étant tout d'abord appliqué sur les surfaces de contact à coller des pièces en plastique, et les surfaces de contact étant ensuite pressées les unes contre les autres,
en tant qu'adhésif, un adhésif en solution ou dispersion à prise physique, conçu pour être compatible avec le plastique dont sont constituées les pièces en plastique à coller, contenant un polyamide en tant que polymère adhésif en concentrations quantitatives de 18 à 35 pour cent en masse dans le solvant ou le dispersant de l'adhésif, étant utilisé,
les propriétés morphologiques du polyamide de l'adhésif étant semblables aux propriétés morphologiques du polyamide des pièces en plastique à relier, et
de l'acide formique étant utilisé en tant que solvant ou dispersant.

2. Procédé selon la revendication 1, **caractérisé en ce que** les pièces en plastique à coller sont fabriquées par le procédé de moulage par injection.

3. Procédé selon la revendication 1 ou 2, **caractérisé en ce que** le solvant ou le dispersant présente un point d'ébullition dans la plage allant de 0 à 110 °C.

4. Procédé selon l'une quelconque des revendications 1 à 3, **caractérisé en ce que** l'adhésif est fabriqué in situ, par mélange à la demande des composants de l'adhésif, à savoir le polymère adhésif d'une part et le solvant ou dispersant d'autre part, directement avant l'application de l'adhésif.

5. Procédé selon l'une quelconque des revendications 1 à 4, **caractérisé en ce que** d'autres constituants sont ajoutés à l'adhésif, à savoir des additifs et/ou des adjuvants, choisis parmi les charges, les pigments, les agents ignifuges, les stabilisateurs, les lubrifiants, les plastifiants, ainsi que leurs mélanges, les autres constituants de l'adhésif étant choisis pour être compatibles avec les pièces en plastique à coller.

6. Procédé selon l'une quelconque des revendications 1 à 5, **caractérisé en ce que** le procédé est réalisé à des températures dans la plage allant de 15 à 30 °C.

7. Procédé selon l'une quelconque des revendications 1 à 6, **caractérisé en ce que** l'adhésif est appliqué sur les surfaces de contact à coller des pièces en plastique par application ponctuelle, projection, pulvérisation, atomisation ou raclage, et les surfaces de contact sont pressées les unes contre les autres à une pression de 0,1 à 20 N/cm².

8. Procédé selon l'une quelconque des revendications 1 à 7, **caractérisé en ce que** l'adhésif est appliqué en une quantité telle que l'épaisseur de la couche d'adhésif résultante soit de 0,05 à 0,3 mm et/ou **en ce que** la dimension du produit collé est ajustée par l'épaisseur choisie de la couche d'adhésif.

9. Procédé selon l'une quelconque des revendications 1 à 8, **caractérisé en ce que** la couche d'adhésif durcie d'une part et les pièces en plastique collées d'autre part présentent des cristallinités et/ou des morphologies et/ou des températures de transition vitreuse identiques.

10. Procédé selon l'une quelconque des revendications 1 à 9, **caractérisé en ce que** les pièces en plastique à coller sont des pièces de boîtier modulaires d'un connecteur multipolaire.

11. Composant électrique ou électronique sous la forme d'un connecteur multipolaire, le composant comprenant deux pièces de boîtier ou plus, chacune constituées de polyamides, qui sont reliées les unes avec les autres,
**caractérisé**
**en ce que** la liaison des pièces en plastique est réalisée par un procédé de collage selon l'une quelconque des revendications 1 à 10.
